# EUROPEAN PATENT SPECIFICATION

(11) **EP 4 425 662 B1**
(45) Date of publication and mention of the grant of the patent: **02.09.2026**
(21) Application number: 23843265.2
(22) Date of filing: 12.07.2023
(51) Int. Cl.: H01M 50/211, H01M 50/242, H01M 50/249, H01M 50/342, H01M 50/256

(54) **BATTERY PACK AND DEVICE INCLUDING THE SAME**
BATTERIEPACK UND VORRICHTUNG DAMIT
BLOC-BATTERIE ET DISPOSITIF LE COMPRENANT

(30) Priority: 20.07.2022 KR 20220089912; 20.07.2022 KR 20220089913; 24.05.2023 KR 20230067036
(43) Date of publication of application: 04.09.2024
(73) Proprietor: LG Energy Solution, Ltd., Seoul 07335 (KR)
(72) Inventor: PARK, Jin Yong, Daejeon 34122 (KR); KWON, Wooyong, Daejeon 34122 (KR); YOON, Hyunmo, Daejeon 34122 (KR); CHI, Ho June, Daejeon 34122 (KR); KIM, Seung Joon, Daejeon 34122 (KR); JUNG, Seyun, Daejeon 34122 (KR); LEE, Myungwoo, Daejeon 34122 (KR); KIM, Insoo, Daejeon 34122 (KR)
(74) Representative: Plasseraud IP
(86) International application number: PCT/KR2023/009969
(87) International publication number: WO 2024/019415

(56) References cited:
- EP-A1- 4 047 706
- EP-A1- 4 583 287
- EP-B1- 2 315 293
- CN-U- 214 123 964
- CN-U- 216 085 170
- CN-U- 216 085 170
- KR-A- 20160 148 398
- KR-A- 20160 148 398
- KR-A- 20210 069 974
- KR-B1- 102 349 746
- US-A1- 2018 331 336
- US-A1- 2022 173 473

## Description

### [TECHNICAL FIELD]

### Cross Citation with Related Application(s)

This application claims priority benefit of Korean Patent Application No. 10-2022-0089912 filed on July 20, 2022, Korean Patent Application No. 10-2022-0089913 filed on July 20, 2022 and Korean Patent Application No. 10-2023-0067036 filed on May 24, 2023 in the Korean Intellectual Property Office.

The present invention relates to a battery pack and a device including the same, and more particularly, a battery pack manufactured by a cell-to-pack technology, and a device including the same.

### [BACKGROUND]

Generally, a secondary battery refers to a battery which can be charged and discharged repeatedly, such as a lithium ion battery, a lithium polymer battery, a nickel cadmium battery, a nickel hydrogen battery, a nickel zinc battery, and the like. An output voltage of a battery cell corresponding to a charge/discharge basic unit of such a secondary battery is about 2.5V to about 4.2V.

In recent years, as secondary batteries are applied to devices which require a high output voltage and a large amount of charge capacity, such as electric vehicles or ESS (Energy Storage Systems), a battery pack, which is manufactured by connecting a plurality of battery cells in series or in parallel to form a battery module, and then connecting the plurality of battery modules configured in this way in series or in parallel again, is widely used.

However, as disclosed in Korean Patent Registration No. 10-2379227, Korean Unexamined Patent Publication No. 10-2022-0052183, and the like, since the existing technology manufactures a battery pack by housing battery cells in a box-shaped metal case to configure a battery module, and then housing such a battery module again in the battery pack case, it has a problem of increasing the overall weight and volume of the battery pack and lowering the energy density of the battery pack.

In addition, in order to increase the energy density of the battery pack, when a conventional cell-to-pack technology, mounting a large number of battery cells directly to a pack case of the battery pack, is applied to a pouch type battery cell having a soft case, it is difficult to handle or stack a large numbers of battery cells at the same time, and there is a risk that the battery cells will be damaged during the process of mounting the battery cells to the pack case.

An example of a battery unit comprising a battery cell and a cell cover including a cover body formed of an electrically insulating material is described in EP 2315293 A1. An example of a cell cover for secondary battery including side plates, an upper plate and two lower plates is described in KR 2016-0148398 A.

### [DETAILED DESCRIPTION OF THE INVENTION]

### [Technical Problem]

It is an object of the present invention to provide a battery pack which reduces the overall weight and volume of the battery pack and increases the energy density of the battery pack, and a device including the same.

It is another object of the present invention to provide a battery pack which facilitates handling and mounting of battery cells in the manufacturing process of a battery pack including a plurality of battery cells, and accomplishes simplification and weight reduction of the structure required for mounting battery cells while preventing damage to the battery cells, thereby reducing manufacturing costs, and a device including the same.

### [Technical Solution]

According to one embodiment of the present invention, there is provided a battery pack according to claim 1.

The blocking part may comprise a first blocking part formed at the other end of the first cover part, and a second blocking part formed at the other end of the second cover part, and the first blocking part and the second blocking part may face each other.

The first blocking part and the second blocking part may be spaced apart from each other.

At least one of the first blocking part and the second blocking part may be arranged in a plurality, which are spaced apart from each other in the longitudinal direction of the battery cell.

The first cover part and the second cover part may be arranged in a direction in which the at least one battery cell is stacked.

The third cover part and the blocking part may be arranged perpendicularly to a direction in which the at least one battery cell is stacked.

The blocking part may cover an edge part of one surface of the at least one battery cell and expose a central part.

The blocking part may comprise an insertion groove into which a finger of a jig configured to contact the inner surface of the cell cover and change an interval between the first cover part and the second cover part of the cell cover is inserted.

The cell cover may have an integral shape.

The cell cover may comprise stainless steel (SUS).

According to another embodiment of the present invention, there is provided a device comprising the above-mentioned battery pack.

### [Advantageous Effects]

According to the present invention, instead of housing a large number of battery cells in a separate module case and mounting them on a pack case of the battery pack, they are only partially covered by a cell cover having a simplified structure, and are mounted directly to the pack case. Thereby, this not only reduces the overall weight and volume of the battery pack and increases the energy density of the battery pack, but also can prevent damage to the battery cells occurring in the process of directly mounting a large number of battery cells and using them, and facilitate swelling control of the battery cells and design of the gas venting path.

In addition, the blocking part of the cell cover supports the battery cell inserted into the corresponding cell cover to block removal of the battery cell, thereby capable of preventing positional change of the battery cell or removal outside the cell cover, and ensuring the safety and reliability of the battery pack.

Further, the cell units each including at least one battery cell are blocked and fixed to a pair of side plates and an integrated end cover, which not only facilitates handling and mounting of battery cells in the manufacturing process of a battery pack including a plurality of battery cells, but also can accomplish simplification and weight reduction of the structure required for mounting battery cells, and reduce manufacturing costs.

Furthermore, it will be clearly appreciated from the following description by those skilled in the art that various technical problems not mentioned above can be solved through various embodiments according to the present invention.

### [BRIEF DESCRIPTION OF THE DRAWINGS]

FIG. 1 is a diagram showing a battery pack according to an embodiment of the present invention;
FIG. 2 is a diagram showing a battery assembly according to an embodiment of the present invention;
FIG. 3 is a partially exploded perspective view of the battery assembly shown in FIG. 2;
FIG. 4 is a perspective view illustrating a cell unit of a battery assembly according to an embodiment of the present invention;
FIG. 5 is an exploded perspective view of the cell unit shown in FIG. 4;
FIG. 6 is a diagram illustrating a method for assembling a cell unit of a battery pack according to an embodiment of the present invention;
FIG. 7 is a diagram illustrating a cell unit of a battery pack according to an embodiment of the present invention;
FIG. 8 is a diagram showing a modification of a cell cover according to an embodiment;
FIG. 9 is a diagram showing a modification of a cell cover according to an embodiment;
FIG. 10 is a diagram showing a modification of a cell cover according to an embodiment;
FIG. 11 is an enlarged view showing a bottom part of a region P1 shown in FIG. 2; and
FIG. 12 is a diagram showing a vehicle according to an embodiment of the present invention.

### [DETAILED DESCRIPTION OF THE EMBODIMENTS]

Hereinafter, various embodiments of the present invention will be described in detail with reference to the accompanying drawings so that those skilled in the art can easily carry out them. The present invention can be modified in various different ways, and is not limited to the embodiments set forth herein.

Portions that are irrelevant to the description will be omitted to clearly describe the present invention, and like reference numerals designate like elements throughout the description.

Further, in the drawings, the size and thickness of each element are arbitrarily illustrated for convenience of description, and the present invention is not necessarily limited to those illustrated in the drawings. In the drawings, the thickness of layers, regions, etc. are exaggerated for clarity. In the drawings, for convenience of description, the thicknesses of a part and a region are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means arranged on or below a reference portion, and does not necessarily mean being arranged on the upper end of the reference portion toward the opposite direction of gravity.

Further, throughout the description, when a portion is referred to as "including" or "comprising" a certain component, it means that the portion can further include other components, without excluding the other components, unless otherwise stated.

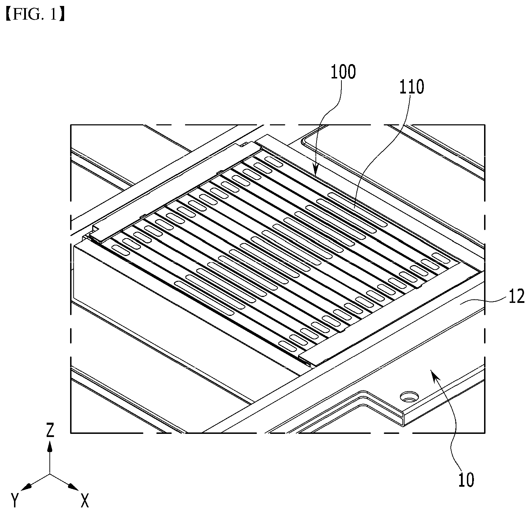

FIG. 1 is a diagram showing a battery pack 10 according to an embodiment of the present invention.

As shown in FIG. 1, the battery pack 10 may include at least one battery assembly 100 and a pack case 12 according to an embodiment of the present invention.

The battery assembly 100 may include a plurality of cell units 110. The plurality of cell units 110 may respectively include at least one pouch type battery cell 203, and a cell cover 200 that partially covers and supports the exterior of at least one pouch type battery cell 203.

The pack case 12 has a seating structure in which the battery assembly 100 is directly seated without a separate case, and may be configured to house a plurality of battery assemblies 100 in separate seating spaces for each battery assembly.

For this purpose, the pack case 12 may include cross beams 14a and 14b which divide its inner space into a plurality of seating spaces. The cross beams 14a and 14b may be arranged to be spaced apart from each other or arranged to cross each other, thereby forming a plurality of seating spaces.

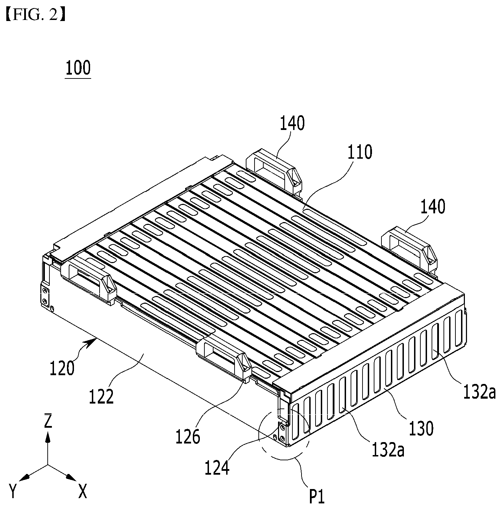

FIG. 2 is a diagram showing a battery assembly 100 according to an embodiment of the present invention.

As shown in FIG. 2, the battery assembly 100 according to an embodiment of the present invention may include a plurality of cell units 110, a pair of side plates 120 and a pair of integrated end covers 130, and may further include a handle unit 140 in accordance with the embodiment.

The plurality of cell units 110 each include at least one battery cell 203, and may be configured to be stacked side by side in the widthwise direction. As will be described again below, each cell unit 110 may include at least one battery cell 203 that forms a basic unit of charging and discharging, and a cell cover 200 that partially covers and supports at least one battery cell 203.

The pair of side plates 120 may be respectively arranged at both ends in the widthwise direction (stacking direction) of the plurality of cell units 110, and configured so as to support the plurality of cell units 110.

For this purpose, at least one side plate of the pair of side plates 120 may include a support part 122, an end cover coupling part 124 and a handle coupling part 126.

The support part 122 may be configured to contact one side surface or the other side surface in the width direction of the plurality of cell units 110 and support the plurality of cell units 110. In this case, the support part 122 may be configured to have a plate structure.

The end cover coupling part 124 may be configured to extend in a lateral direction from the support part 122 and couple with one end part in a lateral direction of the integrated end cover 130.

The handle coupling part 126 may be configured to extend upward from the support part 122 and couple with at least one handle unit among the plurality of handle units 140. As will be described again below, the handle coupling part 126 may be configured to be coupled with and separated from at least one handle unit.

The pair of side plates 120 make the plurality of cell units 110 into blocks together with the integrated end cover 130 to be described later, and the pressure applied to the plurality of cell units 110 can uniformly distribute over the whole cell unit 110. Further, the pair of side plates 120 may be made of a metal material containing aluminum, or may be made of a combination of aluminum and polymer synthetic resin through insert molding.

The pair of integrated end covers 130 are arranged at both ends in the longitudinal direction of the plurality of cell units to support the plurality of cell units, and may be configured to integrally cover the terminal portions of the battery cells 203 included in the plurality of cell units 110.

That is, each integrated end cover 130 can be configured such that one end in the lateral direction is coupled to the first side plate of the pair of side plates, the other end in the lateral direction is coupled to the second side plate of the pair of side plates, and the terminal portions of the battery cells 203 included in the plurality of cell units 110 are integrally covered.

In this case, the integrated end cover 130 may have venting holes 132 at each position corresponding to each of the plurality of cell units 110.

The integrated end cover 130 may be made of a metal material containing aluminum or a polymer synthetic resin, or may be made of a combination of a metal material containing aluminum and a polymer synthetic resin through insert molding.

Such an integrated end cover 130 is applied to the battery assembly 100, so that individual end covers, which are applied for each cell unit to cover the terminal or busbar portion of the battery cell 203 included in the corresponding cell unit, can be omitted, and the manufacturing process can be simplified.

The handle unit 140 may be configured to be gripped by a carrier carrying the battery assembly 100 or connected to a predetermined transport device that lifts or transports the battery assembly 100.

Such a handle unit 140 may be configured to be detachably coupled to the pair of side plates 120. Further, the handle unit 140 may be composed of a metal material having a predetermined strength, a polymer synthetic resin, or a combination thereof.

The battery assembly 100 described above can be expanded in scale by increasing the number of stacked cell units 110.

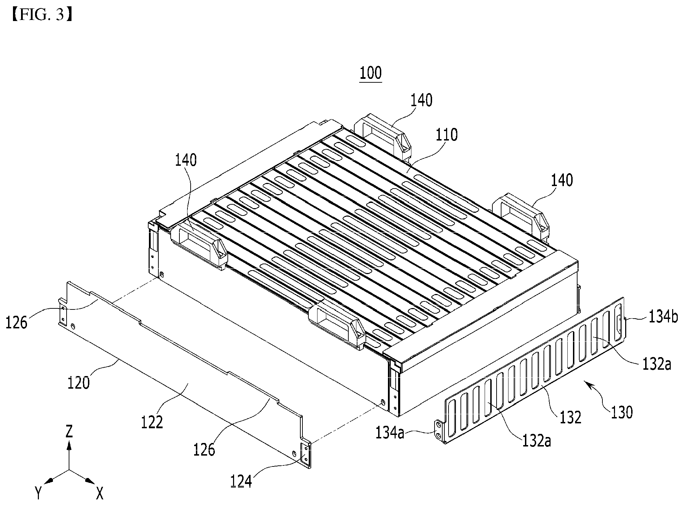

FIG. 3 is a partially exploded perspective view of the battery assembly 100 shown in FIG. 2.

As shown in FIG. 3, a pair of side plates 120 and a pair of integrated end covers 130 of the battery assembly 100 may be coupled to each other to make the plurality of cell units 110 into blocks.

For this purpose, the integrated end cover 130 may include a terminal cover part 132, a first coupling part 134a, and a second coupling part 134b.

The terminal cover part 132 may be configured to integrally cover terminal portions (electrode lead portions) of the battery cells 203 included in the plurality of cell units 110. The terminal cover part 132 may have a venting hole 132a at each position corresponding to each cell unit 110.

The first coupling part 134a may be configured to extend from the terminal cover part 132 toward the first side plate and couple with the end cover coupling part 124 of the first side plate. In this case, the first coupling part 134a and the end cover coupling part 124 may be coupled by a fastening member such as a bolt or a rivet.

The second coupling part 134b may be configured to extend from the terminal cover part 132 toward the second side plate and couple with the end cover coupling part 124 of the second side plate. In this case, the second coupling part 134b and the end cover coupling part 124 may be coupled by a fastening member such as a bolt or a rivet.

Meanwhile, the handle unit 140 can be coupled to the handle coupling part 126 of the corresponding side plate 120 in many different ways capable of coupling and separation.

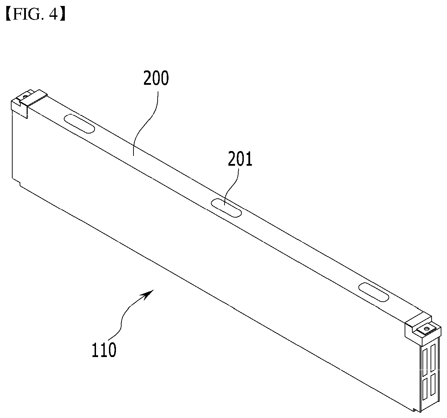

FIG. 4 is a perspective view illustrating a cell unit of a battery assembly 110 according to an embodiment of the present invention.

As shown in FIG. 4, the cell unit 110 may include a cell cover 200 that partially covers the exterior of at least one battery cell 203. Such a cell cover 200 may comprise venting holes 201 provided at various positions according to an intended venting direction. Such a venting hole 201 may be provided so as to form a notch in a predetermined portion of the cell cover 200.

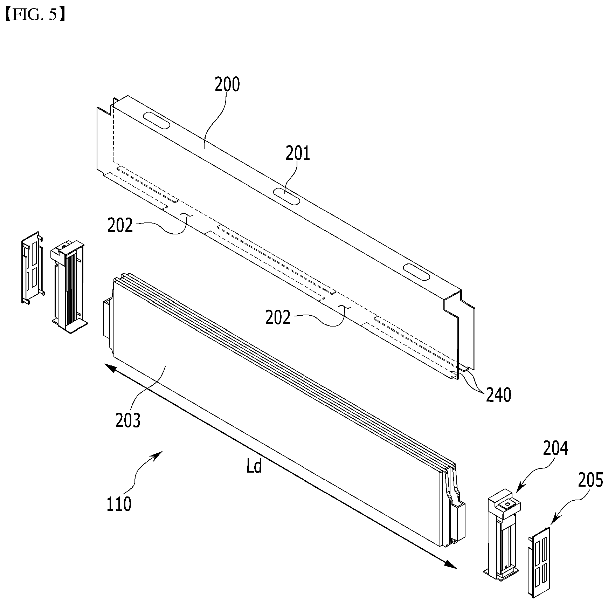

FIG. 5 is an exploded perspective view of the cell unit 110 shown in FIG. 4.

As shown in FIG. 5, the cell unit 110 may include a cell cover 200, at least one battery cell 203, a busbar frame 204 and an insulating cover 205. At least one battery cell 203 may be inserted into the cell unit 110.

The battery cell 203 corresponds to a basic unit of charging and discharging, and can be manufactured by housing an electrode assembly and an electrolyte material in a soft metal case and sealing the metal case. In this case, the electrode assembly can be manufactured by interposing a separator between the cathode and the anode.

Further, an electrode lead electrically connected to the electrode assembly may be provided outside the case of the battery cell 203. Such a battery cell 203 can be configured in a pouch shape.

The cell cover 200 may be configured to partially cover the exterior of at least one battery cell 203. Further, the cell cover 200 may be configured to support at least one battery cell 203 in a standing state.

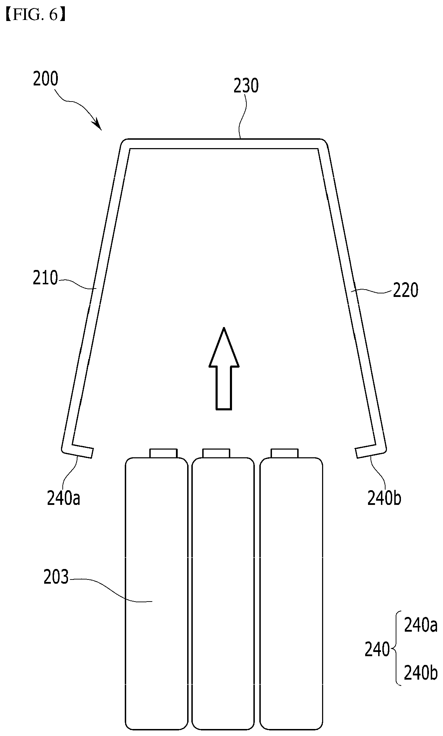

For example, as shown in FIG. 5, the cell cover 200 may be configured to support the three battery cells 203 in a standing state while partially wrapping the exterior of the three battery cells 203. Next, the configuration of the cell cover 200 will be described in detail with reference to FIG. 6.

FIG. 6 is a diagram illustrating a method for assembling a cell unit of a battery pack according to an embodiment of the present invention.

Referring to FIGS. 5 and 6, the cell cover 200 of one embodiment includes a first cover part 210, a second cover part 220, a third cover part 230, and a blocking part 240.

Specifically, the cell cover 200 includes a first cover part 210 that covers one side surface of at least one battery cell 203, a second cover part 220 that covers the other side surface of the at least one pouch type battery cell 203, and a third cover part 230 that connects one end of the first cover part 210 and one end of the second cover part 220.

In this case, the venting hole 201 may be provided in the third cover part 230 of the cell cover 200.

For example, the cell cover 200 may be configured in a '⊏' shape or a 'u' shape that surrounds three surfaces of at least one battery cell 203.

Further, the cell cover 200 includes a blocking part 240.

The blocking part 240 is formed at the other end of the first cover part 210 and the other end of the second cover part 220, respectively. The other end of the first cover part 210 may refer to an end of the first cover part 210 to which the third cover part 230 is not connected. The other end of the second cover part 220 may refer to an end of the second cover part 220 to which the third cover part 230 is not connected.

The blocking unit 240 may be configured to block removal of at least one battery cell 203 inserted between the first cover part 210 and the second cover part 220. That is, the blocking part 240 may be configured to be bent and extended to face each other at the other ends of the first cover part 210 and the second cover part 220 and to support at least one battery cell 203.

As shown in FIG. 5, the blocking part 240 may be provided in a plurality, which are spaced apart from each other. Specifically, the blocking parts 240 may be spaced apart from each other in the longitudinal direction (Ld) of the battery cell 203, and may be arranged to be spaced apart from each other in the widthwise direction of the battery cell 203. As used herein, the longitudinal direction (Ld) of the battery cell 203 means a direction that connects both ends of the battery cell 203 to which the busbar frame 204 is coupled. The widthwise direction of the battery cell 203 may be a direction perpendicular to the longitudinal direction of the battery cell 203. A battery cell 203 may be inserted through the space 202 between the blocking parts 240 spaced apart as above.

However, the shape of the blocking part 240 is not limited thereto, and the blocking part 240 may be provided in one shape extending in the longitudinal direction (Ld) of the battery cell 203. In this case, the blocking part 240 may be provided in one formed at the other end of the first cover part 210, and in one formed at the other end of the second cover part 220 .

The cell cover 200 may have an integral shape. That is, the cell cover may have on shape in which the first cover part 210, the second cover part 220, the third cover part 230 and the blocking part 240 are extended. In this case, the cell cover 200 may be configured by bending a metal plate having a plate structure.

In this manner, the cell cover 200 having a simplified structure is made of a metal material having a higher stiffness than the case of the battery cell 203, and can protect at least one battery cell 203 covered by the cell cover 200 from external impact or vibration. For example, the cell cover 200 may be composed of a material including SUS, which is easy to process and has high corrosion resistance.

The busbar frame 204 may be configured to support electrode leads of at least one battery cell 203 covered by the cell cover 200 and electrically connect the electrode leads to other electrode leads. In this case, the busbar frame 204 may have terminals electrically connected to electrode leads.

The insulating cover 205 may be configured to prevent short circuit of electrode lead or busbar. For this purpose, the insulating cover 205 may be composed of a polymer synthetic resin having insulating properties.

Although not shown in FIGS. 4 and 5, the cell unit 110 may further include a clamping member configured to clamp the cell cover 200. The clamping member may be configured to clamp the cell cover 200 into which at least one battery cell 203 is inserted, and prevent widening an interval between the both ends of the cell cover 200 (between the other end of the first cover part 210 and the other end of the second cover part 220) or separation of an inserted battery cell 203 from the cell cover 200. The clamping member may be composed of a tape or a metal material having elasticity.

FIG. 5 and the description below illustrate and explain that at least one battery cell 203 covered by one cell cover 200 is formed in three, but the number of battery cells 203 covered by the cell cover 200 may be variously changed according to the scale of the cell cover 200.

As shown in FIG. 6, the blocking part 240 may include a first blocking part 240a formed at the other end of the first cover part 210 and a second blocking part 240b formed at the other end of the second cover part 220. The first blocking part 240a and the second blocking part 240b may face each other. At least one of the first blocking part 240a and the second blocking part 240b may be provided in a plurality, which are spaced apart from each other in the longitudinal direction (Ld, see FIG. 5) of the battery cell 203. For example, as described above with reference to FIG. 5, the first blocking part 240a may be provided in a plurality, which are spaced apart from each other in the longitudinal direction (Ld, see FIG. 5) of the battery cell 203. The second blocking part 240b may also be provided in a plurality, which are spaced apart from each other in the longitudinal direction (Ld, see FIG. 5) of the battery cell 203.

Further, the first blocking part 240a and the second blocking part 240b may be arranged so as to be spaced apart from each other in the widthwise direction of the battery cell 203. Thereby, the battery cells 203 may be inserted between the first blocking part 240a and the second blocking part 240b.

For example, when the interval between the first cover part 210 and the second cover part 220 of the cell cover 200 is widened using a jig finger or the like, the battery cells 203 can be inserted between the first cover part 210 and the second cover part 220.

The blocking part 240 of the cell cover 200 may have an appropriate length and shape so as not to damage the inserted battery cells 203.

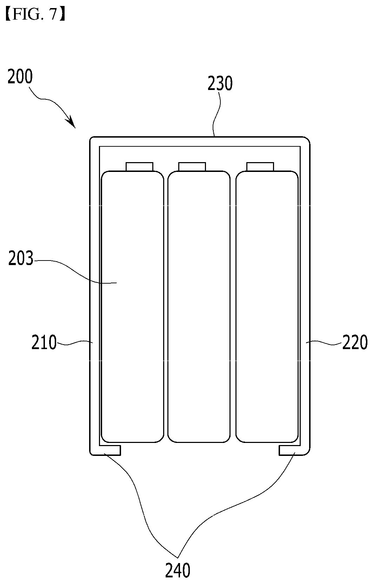

FIG. 7 is a diagram illustrating a cell unit of a battery pack according to an embodiment of the present invention.

As shown in FIG. 7, when the battery cells 203 are inserted inside the cell cover 200 and then the jig finger is removed, the first cover part 210 and the second cover part 220 return to their original positions due to their elasticity.

The blocking part 240 of the cell cover 200 may block removal of the battery cells 203 inserted between the first cover part 210 and the second cover part 220. Therefore, the blocking part 240 may be configured to extend from each end of the first cover part 210 and the second cover part 220 to support lower side edge parts of the battery cells 203.

Referring to FIG. 7 in which the assembly of the cell cover 200 and the battery cells 203 has been completed, the first cover part 210 and the second cover part 220 may be arranged in a direction in which the battery cells 203 are stacked. Further, the third cover part 230 and the blocking part 240 may be arranged perpendicularly to the direction in which the battery cells 203 are stacked. The blocking part 240 may partially cover one surface of the battery cells 203. Specifically, the blocking part 240 may cover an edge part of one surface of the battery cells 203 and expose a central part thereof.

The blocking part 240 can prevent removal of the battery cells 203 while covering a part of the battery cells 203, and support the battery cells 203 in a standing state together with the first to third cover parts 210, 220 and 230.

However, the shape of the blocking part 240 is not limited to the contents described above.

For example, the blocking part 240 may be bent to the inside of the cell cover 200 at each end of the first cover part 210 and the second cover part 220 to form a hooking structure.

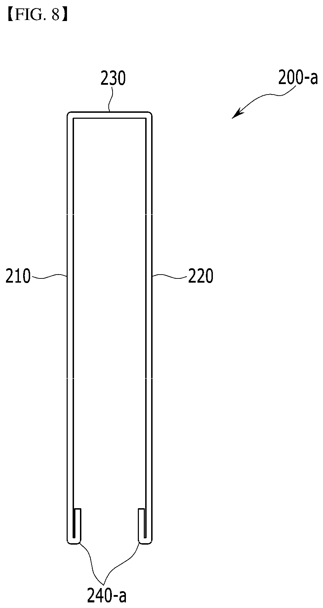

FIG. 8 is a diagram showing a modification of a cell cover 200-a according to an embodiment.

As shown in FIG. 8, the blocking part 240-a of the cell cover 200-a is bent to the inside of the cell cover 200-a at each end of the first cover part 210 and the second cover part 220 to form a hooking structure.

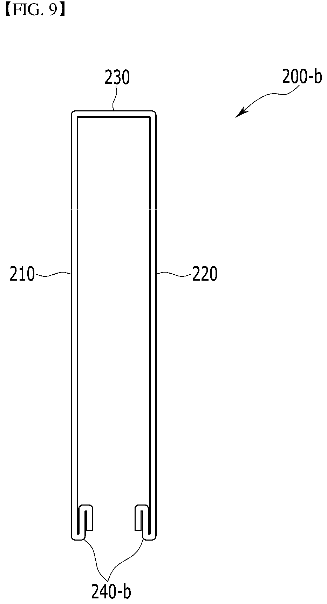

FIG. 9 is a diagram showing a modification of a cell cover 200-b according to an embodiment.

As shown in FIG. 9, the blocking part 240-b of the cell cover 200-b is bent to the inside of the cell cover 200-b at each end of the first cover part 210 and the second cover part 220, and then may be bent roundly to the outside of the cell cover 200-b. The blocking part 240-b is configured to support the battery cells 203 with a round surface, and thus, can prevent damage to the soft battery cells 203 such as pouch cells.

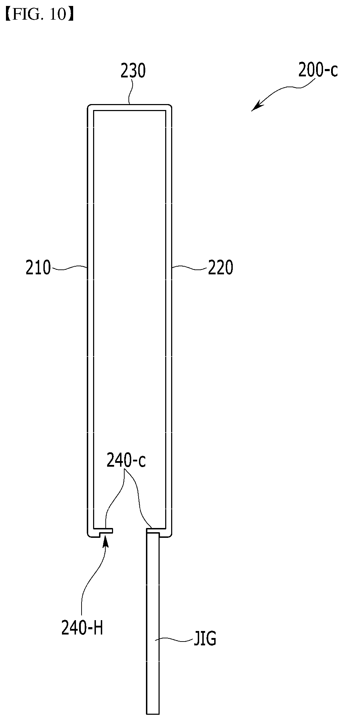

FIG. 10 is a diagram showing a modification of a cell cover 200-c according to an embodiment.

As shown in FIG. 10, the blocking part 240-c of the cell cover 200-c may include an insertion groove 240-H.

A finger of the jig may be inserted into the insertion groove 240-H. Specifically, the finger of the jig can contact the inner surface of the blocking part 240-c to change an interval between the first cover part 210 and the second cover part 220 of the cell cover 200-c. The blocking part 240-c of one embodiment includes an insertion groove 240-H, so that the interval between the first cover part 210 and the second cover part 220 can be widened without damaging the cell cover 200-c by the jig.

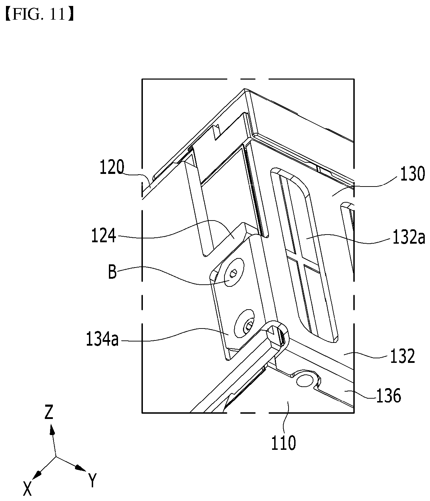

FIG. 11 is an enlarged view showing a bottom part of a region P1 shown in FIG. 2.

As shown in FIG. 11, the first coupling part 134a of the integrated end cover 130 may be coupled to the end cover coupling part 124 of the first side plate through the fastening member B.

Further, the integrated end cover 130 may include a cell unit support part 136. The cell unit support part 136 may be configured to extend from the terminal cover part 132 provided with the venting hole 132a to the lower surface of the plurality of cell units 110 and support the plurality of cell units 110. In this case, the cell unit support part 136 may be configured to support lower ends of the busbar frames 204 provided in the plurality of cell units 110.

Meanwhile, the battery assembly 100 according to various embodiments of the present invention not only can be applied to a battery pack, but also can be applied to a battery module which has a separate case and is housed in a battery pack or a rack of an ESS.

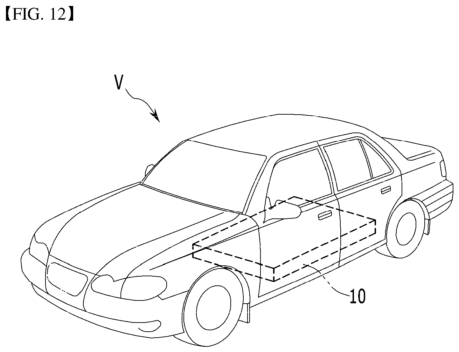

FIG. 12 is a diagram showing a vehicle V according to an embodiment of the present invention.

As shown in FIG. 12, a vehicle V according to an embodiment of the present invention may include a battery pack 10 including at least one battery assembly according to any one of the various embodiments described above.

Therefore, the battery pack 10 comprised in the vehicle V can provide electrical energy required for various operations of the vehicle V.

For reference, the battery assembly according to the present invention not only can be applied to battery packs used in various electrical systems in addition to the vehicle, but also can be applied to battery modules which has a separate case and is housed in a rack of such a battery pack or ESS.

As described above, according to the present invention, instead of housing a large number of battery cells 203 in a separate module case and mounting them on a pack case 12 of the battery pack, they are only partially covered by a cell cover 200 having a simplified structure, and are mounted directly to the pack case 12. Thereby, this not only reduces the overall weight and volume of the battery pack 10 and increases the energy density of the battery pack 10, but also can prevent damage to the battery cells 203 occurring in the process of directly mounting a large number of battery cells 203 and using them, and facilitate swelling control of the battery cells 203 and design of the gas venting path.

Further, the blocking part 240 of the cell cover 200 supports the battery cell 203 inserted into the corresponding cell cover 200 to block removal of the battery cell 203, thereby being able to prevent positional change of the battery cell 203 and removal of outside the cell cover 200, and to ensure the safety and reliability of the battery pack 10.

Further, the insertion groove 240-H, into which fingers of the jig configured to contact the inner surface of the cell cover 200 and change the interval between both ends of the cell cover 200 are inserted, is provided in the blocking part 240-c of the cell cover 200-c, which facilitate the assembly process of inserting the battery cell 203 into the cell cover 200-c, and prevents damage to the battery cell 203.

Further, the cell units each including at least one battery cell 203 are blocked and fixed to a pair of side plates and an integrated end cover, which not only facilitates handling and mounting of battery cells 203 in the manufacturing process of a battery pack including a plurality of battery cells, but also can accomplish simplification and weight reduction of the structure required for mounting battery cells 203, and reduce the manufacturing costs.

The battery pack 10 described above can be applied to various devices. For example, such devices can be applied to vehicle means such as an electric bike, an electric vehicle, and a hybrid electric vehicle. However, the present invention is not limited thereto, and can be applied to various devices capable of using the battery pack, which also falls within the scope of the present invention.

The terms representing directions such as the front side, the rear side, the left side, the right side, the upper side, and the lower side have been used in the present embodiment, but the terms used are provided simply for convenience of description and may become different according to the position of an object, the position of an observer, or the like.

Further, it would be obviously understood that the embodiments according to the present invention can also solve various technical objects not mentioned in the specification in the corresponding technical field and also in the related technical fields.

The present invention has been explained above with reference to specific embodiments. However, it will be clearly understood by those skilled in the art that various modifications can be made within the technical scope of the present invention. Therefore, the above-described embodiments should be considered from an illustrative point of view, not from a restrictive point of view. That is, the true scope of the present invention is set forth in the appended claims.

### [Description of Reference Numerals]

- 10:: battery pack
- 100:: battery assembly
- 110:: cell unit
- 200:: cell cover
- 210:: first cover part
- 220:: second cover part
- 230:: third cover part
- 240:: blocking part

## Claims

1. A battery pack (10) comprising:
a battery assembly (100) including a plurality of cell units (110); and
a pack case (12) that houses the battery assembly (100) in an inner space,
wherein each cell unit (110) includes at least one battery cell (203) and a cell cover (200) that partially covers the at least one battery cell (203), and
wherein the cell cover (200) comprises a first cover part (210) that covers one side surface of the at least one battery cell (203), a second cover part (220) that covers the other side surface of the at least one battery cell (203), a third cover part (230) that connects one end of the first cover part (210) and one end of the second cover part (220), and blocking parts (240) that are respectively formed at the other end of the first cover part (210) and the other end of the second cover part (220), and block removal of the at least one battery cell (203),
**characterized in that** each of the blocking parts (240) comprises a first portion configured to be bent to the inside the cell cover (200) at each other end of the first cover part (210) and the second cover part (220), followed by a second portion configured to be roundly bent to the outside of the cell cover (200).

2. The battery pack (10) of claim 1, wherein:
the blocking part (240) comprises a first blocking part (240a) formed at the other end of the first cover part (210), and a second blocking part (240b) formed at the other end of the second cover part (220), and
the first blocking part (240a) and the second blocking part (240b) face each other.

3. The battery pack (10) of claim 2, wherein:
the first blocking part (240a) and the second blocking part (240b) are spaced apart from each other.

4. The battery pack (10) of claim 1, wherein:
at least one of the first blocking part (240a) and the second blocking part (240b) is arranged in a plurality, which are spaced apart from each other in the longitudinal direction of the battery cell (203).

5. The battery pack (10) of claim 1, wherein:
the first cover part (210) and the second cover part (220) are arranged in a direction in which the at least one battery cell (203) is stacked.

6. The battery pack (10) of claim 1, wherein:
the third cover part (230) and the blocking part (240) are arranged perpendicularly to a direction in which the at least one battery cell (203) is stacked.

7. The battery pack (10) of claim 6, wherein:
the blocking part (240) covers an edge part of one surface of the at least one battery cell (203), and exposes a central part.

8. The battery pack (10) of claim 1, wherein:
the blocking part (240) comprises an insertion groove (240-H) adapted for insertion of a finger of a jig for contacting the inner surface of the cell cover (200) and for changing an interval between the first cover part (210) and the second cover part (220) of the cell cover (200).

9. The battery pack (10) of claim 1, wherein:
the cell cover (200) has an integral shape.

10. The battery pack (10) of claim 1, wherein:
the cell cover (200) comprises stainless steel.

11. A device comprising the battery pack (10) of claim 1.

## Patentansprüche

1. Batteriepack (10), umfassend:
eine Batterieanordnung (100), die eine Vielzahl von Zelleneinheiten (110) enthält; und
ein Packgehäuse (12), das die Batterieanordnung (100) in einem Innenraum aufnimmt,
wobei jede Zelleneinheit (110) mindestens eine Batteriezelle (203) und eine Zellenabdeckung (200) enthält, die die mindestens eine Batteriezelle (203) teilweise abdeckt, und
wobei die Zellenabdeckung (200) einen ersten Abdeckteil (210), der eine Seitenfläche der mindestens einen Batteriezelle (203) abdeckt, einen zweiten Abdeckteil (220), der die andere Seitenfläche der mindestens einen Batteriezelle (203) abdeckt, einen dritten Abdeckteil (230), der ein Ende des ersten Abdeckteils (210) und ein Ende des zweiten Abdeckteils (220) verbindet, und Blockierteile (240) umfasst, die jeweils am anderen Ende des ersten Abdeckteils (210) und am anderen Ende des zweiten Abdeckteils (220) ausgebildet sind und ein Entfernen der mindestens einen Batteriezelle (203) blockieren,
**dadurch gekennzeichnet, dass** jeder der Blockierteile (240) einen ersten Abschnitt umfasst, der so konfiguriert ist, dass er an jedem anderen Ende des ersten Abdeckteils (210) und des zweiten Abdeckteils (220) zur Innenseite der Zellenabdeckung (200) gebogen wird, gefolgt von einem zweiten Abschnitt , der so konfiguriert ist, dass er rund zur Außenseite der Zellenabdeckung (200) gebogen wird.

2. Batteriepack (10) nach Anspruch 1, wobei:
der Blockierteil (240) einen ersten Blockierteil (240a), der am anderen Ende des ersten Abdeckteils (210) ausgebildet ist, und einen zweiten Blockierteil (240b) umfasst, der am anderen Ende des zweiten Abdeckteils (220) ausgebildet ist, und
der erste Blockierteil (240a) und der zweite Blockierteil (240b) einander zugewandt sind.

3. Batteriepack (10) nach Anspruch 2, wobei:
der erste Blockierteil (240a) und der zweite Blockierteil (240b) voneinander beabstandet sind.

4. Batteriepack (10) nach Anspruch 1, wobei:
mindestens einer von dem ersten Blockierteil (240a) und dem zweiten Blockierteil (240b) in einer Vielzahl angeordnet ist, die in der Längsrichtung der Batteriezelle (203) voneinander beabstandet sind.

5. Batteriepack (10) nach Anspruch 1, wobei:
der erste Abdeckteil (210) und der zweite Abdeckteil (220) in einer Richtung angeordnet sind, in der die mindestens eine Batteriezelle (203) gestapelt ist.

6. Batteriepack (10) nach Anspruch 1, wobei:
der dritte Abdeckteil (230) und der Blockierteil (240) senkrecht zu einer Richtung angeordnet sind, in der die mindestens eine Batteriezelle (203) gestapelt ist.

7. Batteriepack (10) nach Anspruch 6, wobei:
der Blockierteil (240) einen Randteil einer Oberfläche der mindestens einen Batteriezelle (203) abdeckt und einen mittleren Teil freilegt.

8. Batteriepack (10) nach Anspruch 1, wobei:
der Blockierteil (240) eine Einführungsnut (240-H) umfasst, die für das Einführen eines Fingers einer Vorrichtung zum Kontaktieren der Innenfläche der Zellenabdeckung (200) und zum Ändern eines Abstands zwischen dem ersten Abdeckteil (210) und dem zweiten Abdeckteil (220) der Zellenabdeckung (200) angepasst ist.

9. Batteriepack (10) nach Anspruch 1, wobei:
die Zellenabdeckung (200) eine einstückige Form aufweist.

10. Batteriepack (10) nach Anspruch 1, wobei:
die Zellenabdeckung (200) Edelstahl umfasst.

11. Vorrichtung, die den Batteriepack (10) nach Anspruch 1 umfasst.

## Revendications

1. Bloc-batterie (10) comprenant :
un ensemble de batteries (100) incluant une pluralité d'unités de cellule (110) ; et
un boîtier de bloc (12) qui loge l'ensemble de batteries (100) dans un espace intérieur,
dans lequel chaque unité de cellule (110) inclut au moins une cellule de batterie (203) et un couvercle de cellule (200) qui recouvre partiellement l'au moins une cellule de batterie (203), et
dans lequel le couvercle de cellule (200) comprend une première partie de couvercle (210) qui recouvre une surface latérale de l'au moins une cellule de batterie (203), une deuxième partie de couvercle (220) qui recouvre l'autre surface latérale de l'au moins une cellule de batterie (203), une troisième partie de couvercle (230) qui relie une extrémité de la première partie de couvercle (210) et une extrémité de la deuxième partie de couvercle (220), et des parties de blocage (240) qui sont respectivement formées à l'autre extrémité de la première partie de couvercle (210) et à l'autre extrémité de la deuxième partie de couvercle (220), et bloquent le retrait de l'au moins une cellule de batterie (203),
**caractérisé en ce que** chacune des parties de blocage (240) comprend une première portion configurée pour être pliée vers l'intérieur du couvercle de cellule (200) à chaque autre extrémité de la première partie de couvercle (210) et de la deuxième partie de couvercle (220), suivie d'une deuxième portion configurée pour être pliée de manière arrondie vers l'extérieur du couvercle de cellule (200).

2. Le bloc-batterie (10) selon la revendication 1, dans lequel:
la partie de blocage (240) comprend une première partie de blocage (240a) formée à l'autre extrémité de la première partie de couvercle (210), et une deuxième partie de blocage (240b) formée à l'autre extrémité de la deuxième partie de couvercle (220), et
la première partie de blocage (240a) et la deuxième partie de blocage (240b) se font face.

3. Le bloc-batterie (10) selon la revendication 2, dans lequel:
la première partie de blocage (240a) et la deuxième partie de blocage (240b) sont espacées l'une de l'autre.

4. Le bloc-batterie (10) selon la revendication 1, dans lequel:
au moins l'une de la première partie de blocage (240a) et de la deuxième partie de blocage (240b) est agencée en une pluralité, lesquelles sont espacées les unes des autres dans la direction longitudinale de la cellule de batterie (203).

5. Le bloc-batterie (10) selon la revendication 1, dans lequel:
la première partie de couvercle (210) et la deuxième partie de couvercle (220) sont agencées dans une direction dans laquelle l'au moins une cellule de batterie (203) est empilée.

6. Le bloc-batterie (10) selon la revendication 1, dans lequel:
la troisième partie de couvercle (230) et la partie de blocage (240) sont agencées perpendiculairement à une direction dans laquelle l'au moins une cellule de batterie (203) est empilée.

7. Le bloc-batterie (10) selon la revendication 6, dans lequel:
la partie de blocage (240) recouvre une partie de bord d'une surface de l'au moins une cellule de batterie (203), et expose une partie centrale.

8. Le bloc-batterie (10) selon la revendication 1, dans lequel:
la partie de blocage (240) comprend une rainure d'insertion (240-H) adaptée pour l'insertion d'un doigt d'un gabarit pour entrer en contact avec la surface intérieure du couvercle de cellule (200) et pour changer un intervalle entre la première partie de couvercle (210) et la deuxième partie de couvercle (220) du couvercle de cellule (200).

9. Le bloc-batterie (10) selon la revendication 1, dans lequel:
le couvercle de cellule (200) est formé en une seule pièce.

10. Le bloc-batterie (10) selon la revendication 1, dans lequel:
le couvercle de cellule (200) comprend de l'acier inoxydable.

11. Dispositif comprenant le bloc-batterie (10) de la revendication 1.
